# EUROPÄISCHE PATENTANMELDUNG

(11) **EP 2 897 256 A1**
(43) Veröffentlichungstag der Anmeldung: **22.07.2015**
(21) Anmeldenummer: 14151235.0
(22) Anmeldetag: 15.01.2014
(51) Int. Cl.: H02K 3/40

(54) **Isolierungssystem, Stator, elektrische Maschine, insbesondere Turbogenerator, sowie Verfahren zum Isolieren eines elektrischen Leitelements**

(71) Anmelder: Siemens Aktiengesellschaft, 80333 München (DE)
(72) Erfinder: Mashkin, Andrey, 50672 Köln (DE); Pohlmann, Friedhelm, 45355 Essen (DE); Brockschmidt, Mario, 45131 Essen (DE); Litinsky, Alexander, 45470 Mülheim (DE); Merte, Ralf, 44225 Dortmund (DE); Schmidt, Guido, 42799 Leichlingen (DE); Staubach, Christian, 45768 Marl (DE)

(57) **Zusammenfassung**

Die Erfindung betrifft ein Isolierungssystem (1) eines elektrischen Leitelements (6) einer elektrischen Maschine (3) mit mehreren Isolierungssystem-Schichten (10) umfassend eine Innenpotentialsteuerungsschicht (11), eine Hauptisolationsschicht (12), eine Außenglimmschutzschicht (13) und eine Endenglimmschutzschicht (14), bei welchem diese Isolierungssystem-Schichten (10) jeweils einen mit Harz durchtränkten Bandmaterialstreifen (20, 21, 22, 23) umfassen, welcher mit einer Vielzahl an Wicklungen (30, 31, 32, 34) derart um das elektrische Leitelement (6, 7) gewickelt ist, dass die Wicklungen (30, 31, 32, 34) mit Überlappungsbereichen (35) an Langseitenbereichen (41, 42) des jeweiligen Bandmaterialstreifens (20, 21, 22, 23) halbüberlappend angeordnet sind, wobei sich das Isolierungssystem erfindungsgemäß dadurch auszeichnet, dass wenigstens einer der Bandmaterialstreifen (20, 21, 22, 23) an seinen Langseitenbereichen (41, 42) gegenüber seinem Mittenbereich (43) abgeflacht ist.

## Beschreibung

Die Erfindung betrifft ein Isolierungssystem eines elektrischen Leitelements einer elektrischen Maschine mit mehreren Isolierungssystem-Schichten umfassend eine Innenpotentialsteuerungsschicht, eine Hauptisolationsschicht, eine Außenglimmschutzschicht und eine Endenglimmschutzschicht, bei welchem diese Isolierungssystem-Schichten jeweils einen mit Harz durchtränkten Bandmaterialstreifen umfassen, welcher mit einer Vielzahl an Wicklungen derart um das elektrische Leitelement gewickelt ist, dass die Wicklungen mit Überlappungsbereichen an Langseitenbereichen des Bandmaterialstreifens halbüberlappend angeordnet sind.

Die Erfindung betrifft auch Stator einer elektrischen Maschine mit wenigstens einem Nuten umfassenden Ständerblechpaket und mit elektrisch leitenden Leitelementen, welche in den Nuten des wenigstens einen Ständerblechpakets isolierend gehaltert sind.

Die Erfindung betrifft ferner eine elektrische Maschine, insbesondere einen Turbogenerator, mit einem Isolierungssystem zum Isolieren von elektrischen Leitelementen gegenüber einem Ständerblechpaket zum Haltern der elektrischen Leitelemente.

Die Erfindung betriff darüber hinaus ein Verfahren zum Isolieren eines elektrischen Leitelements einer elektrischen Maschine, bei welchem eine Innenpotentialsteuerungsschicht, eine Hauptisolierungsschicht, eine Außenglimmschutzschicht und eine Endenglimmschutzschicht jeweils als Bandmaterialstreifen mit einer Vielzahl an Wicklungen um das elektrische Leitelement gewickelt und bei welchem diese Wicklungen an Langseitenbereichen des jeweiligen Bandmaterialstreifens halbüberlappend angeordnet werden.

Insbesondere gattungsgemäße Isoliersysteme sind aus dem Stand der Technik gut bekannt. Mittels derartiger Isoliersysteme werden an gattungsgemäßen rotierenden elektrischen Maschinen, wie beispielsweise Turbogeneratoren, aber teilweise auch in Wassergeneratoren oder anderen Motoren, elektrisch leitende Leitelemente, wie etwa Generatorwicklungsstäbe aus Kupfer, isoliert. Diese elektrischen Leitelemente sind in einem Grundkörper eines Stators einer elektrischen Maschine isoliert gehaltert und bilden dabei im Wesentlichen die eigentliche Statorwicklung aus. In der Regel umfasst der Grundkörper hierzu ein geerdetes Blechpaket, welches eine Vielzahl an Nuten bereitstellt, in welchen die elektrischen Leitelemente festgelegt sind. Im Betrieb liegen an einer derartigen Statorwicklung extrem hohe Potentiale im zweistelligen Kilovoltbereich an. Die elektrisch leitenden Leitelemente müssen daher mit einem entsprechend ausgebildeten Isoliersystem gegenüber diesem Blechpaket isoliert werden. Hierzu umfasst das Isoliersystem eine Hauptisolierung mit einer Hauptisolierungsschicht aus einem oder mehreren Bandmaterialstreifen, welche in mehreren Lagen um das jeweilige elektrische Leitelement gewickelt sind. Darüber hinaus umfasst das Isoliersystem noch eine weiter innen angeordnete Potentialsteuerungsschicht sowie eine weiter außen angeordnete Außenglimmschutzschicht und eine ebenfalls weiter außen angeordnete Endenglimmschutzschicht. Auch die innere Potentialsteuerungsschicht, die Außenglimmschutzschicht und die Endenglimmschutzschicht bestehen aus um das elektrische Leitelement gewickelten Bandmaterialstreifen. Die innenliegende Potentialsteuerungsschicht und die außen liegende Außenglimmschutzschicht dienen der Abschirmung gegen Hohlräume und Ablösungen. Die elektrische Spannung wird in der Hauptisolierungsschicht ausgehend von der inneren Potentialsteuerungsschicht in radialer Richtung bis zur Außenglimmschutzschicht abgebaut, wodurch sichergestellt ist, dass das elektrische Feld nur im Inneren der Hauptisolierungsschicht verbleibt und keine Teilentladungen zwischen der Hauptisolierungsschicht und dem geerdeten Blechpaket entstehen. Zur axialen Steuerung des elektrischen Feldes an den axialen Enden der Außenglimmschutzschicht ist die schwächer leitfähige Endenglimmschutzschicht appliziert, welche mit der Außenglimmerschutzschicht elektrisch verbunden ist. Wie bereits erwähnt, werden in der Regel alle vorgenannten Schichten des Isoliersystems schichtweise aus Bandmaterialstreifen hergestellt, welche jeweils vornehmlich sich halbüberlappend um das elektrische Leitelement gewickelt und mit Harz getränkt werden. Die genannte halbüberlappende Anordnung der einzelnen Wicklungen des jeweiligen Bandmaterialstreifens garantiert zum einen eine gute axiale wie auch radiale Verbindung der Wicklungen in den leitfähigen Lagen sowie möglichst lange Erosionspfade in der Hauptisolierungsschicht. Hierdurch kann eine sehr lange Lebensdauer garantiert werden. Die Bandmaterialstreifen der Hauptisolierungsschicht enthalten hierbei isolationswirkende Glimmerpartikel, während die Bandmaterialstreifen der übrigen Schichten mit verschiedenen halb- und/oder leitfähigen Partikeln dotiert sind. Ein derartig aufgebautes Isoliersystem hat sich gut bewährt, jedoch ist es nachteilig, dass in der Hauptisolierungsschicht in den Überlappungsbereichen Fehlgebiete entstehen, welche überwiegend nur mit Harz und weniger mit den isolationswirkenden Glimmerpartikeln ausgefüllt sind. Diese so ausgebildeten Hauptisolationsschicht-Fehlgebiete unterscheiden sich von den übrigen Hauptisolationsschicht-Gebieten, in welchen ein ordnungsgemäßes Harz-Glimmerpartikel-Gemisch vorliegt, durch eine geringere elektrische Festigkeit. Die Fehlgebiete erfahren aber aufgrund der im Vergleich zu dem ordnungsgemäßen Harz-Glimmerpartikel-Gemisch geringeren Permittivität eine höhere Feldbelastung. Deshalb sollen solche Fehlgebiete möglichst vermieden werden.

Es ist Aufgabe der Erfindung, gattungsgemäße Isolierungssysteme weiterzuentwickeln, um zumindest die vorstehend genannten Nachteile zu überwinden.

Die Aufgabe der Erfindung wird von einem Isolierungssystem eines elektrischen Leitelements einer elektrischen Maschine mit mehreren Isolierungssystem-Schichten umfassend eine Innenpotentialsteuerungsschicht, eine Hauptisolationsschicht, eine Außenglimmschutzschicht und eine Endenglimmschutzschicht gelöst, bei welchem diese Isolierungssystem-Schichten jeweils einen mit Harz durchtränkten Bandmaterialstreifen umfassen, welcher mit einer Vielzahl an Wicklungen derart um das elektrische Leitelement gewickelt ist, dass die Wicklungen mit Überlappungsbereichen an Langseitenbereichen des Bandmaterialstreifens halbüberlappend angeordnet sind, wobei sich das Isolierungssystem erfindungsgemäß dadurch auszeichnet, dass wenigstens einer der Bandmaterialstreifen an seinen Langseitenbereichen gegenüber seinem Mittenbereich abgeflacht ist.

Durch diese abgeflachten Langseitenbereiche gelingt es auf verblüffend einfache Weise kritisch große Zwischenraumvolumen zwischen den Wicklungen zu vermeiden, wodurch wiederum die Gefahr verringert ist, dass große nur überwiegend mit Harz, in welchem kaum Glimmerpartikel enthalten sind, verfüllte Zwischenräume entstehen. Dies trifft speziell auf die Hauptisolierungsschicht des vorliegenden Isolierungssystems zu.

Hinsichtlich der übrigen leitfähigeren Isolierungssystem-Schichten ergibt sich zusätzlich der Vorteil, dass scharfkantige Stufenabschnitte, welche insbesondere radial über die Wicklungen hinaus und in die Hauptisolierungsschicht hinein ragen können, vermeidbar sind, wodurch dort die Gefahr lokaler elektrischer Felderhöhungen signifikant reduziert ist. Derartige elektrische Felderhöhungen können insbesondere an der Innenpotentialsteuerungsschicht und an der Außenglimmschutzschicht ausgeprägt sein.

Ferner kann auch in diesen Bereichen die Entstehung von harzgefüllten Zwischenräumen unterbunden oder zumindest eingedämmt werden, so dass die Gefahr von elektrischen Teilentladungen, welche durch einen Mix aus Feldverzerrungen, elektrisch leitfähigen Kanten sowie eine schwache elektrische Leitfähigkeit des Harzes hervorgerufen werden können, gut reduziert werden kann.

Vorteilhafterweise kann mittels des erfindungsgemäßen Isolierungssystems insgesamt sehr gut der Gefahr begegnet werden, dass bei elektrisch belasteten Isolierungssystemen insbesondere eine teilentladungsinduzierte Erosion mit sich ausbildenden "Treeing"-Kanälen, welche letztendlich zum elektrischen Durchschalgen der Isolation führen können, entsteht.

Es versteht sich, dass alle Isolierungssystem-Schichten mit einem Bandmaterialstreifen, der gegenüber seinem Mittenbereich abgeflachte Seitenbereiche aufweist, ausgestattet sein können.

Das vorliegende Isolierungssystem kann bevorzugt zwischen elektrischen Leitelementen und einem Massenpotential im Nut- und Wickelkopfbereich einer elektrischen Maschine eingesetzt werden.

Insofern wird die Aufgabe der Erfindung auch von einem Stator einer elektrischen Maschine mit wenigstens einem Nuten umfassenden Ständerblechpaket und mit elektrisch leitenden Leitelementen gelöst, welche in den Nuten des wenigstens einen Ständerblechpakets isolierend gehaltert sind, wobei sich der Stator durch ein Isolierungssystem nach einem der vorliegenden Merkmale auszeichnet. Hierdurch kann der Stator leistungsfähiger und/oder mit einer höheren Lebensdauer gestaltet werden.

Ebenso wird die Aufgabe der Erfindung von einer elektrischen Maschine, insbesondere von einem Turbogenerator, mit einem Isolierungssystem zum Isolieren von elektrischen Leitelementen gegenüber einem Blechpaket zum Haltern der elektrischen Leitelemente gelöst, wobei sich die elektrische Maschine durch ein Isolierungssystem nach einem der vorliegenden Merkmale Ansprüche und/oder durch einen Stator nach einem der vorliegenden Merkmale auszeichnet. Hierdurch kann die Betriebssicherheit der elektrischen Maschine signifikant erhöht werden.

Das erfindungsgemäße Isolierungssystem weist die einzelnen Isolierungssystem-Schichten auf, nämlich die Innenpotentialsteuerungsschicht (IPS), die Hauptisolationsschicht, die Außenglimmschutzschicht (AGS) und die Endenglimmschutzschicht (IPS).

Bei dem Isolierungssystem ist ausgehend von einer Mittelachse des zu isolierenden elektrischen Leitelements die Innenpotentialsteuerungsschicht radial innen direkt bereichsweise auf das elektrische Leitelement aufgewickelt. Radial weiter außen ist die Hauptisolationsschicht angeordnet, welche wiederum auf die radial weiter innen liegende Innenpotentialsteuerungsschicht aufgewickelt ist. Radial noch weiter außen folgen die Außenglimmschutzschicht und die Endenglimmschutzschicht, welche axial nebeneinander auf die radial weiter innen liegende Hauptisolationsschicht aufgewickelt sind.

Es versteht sich, dass jede der Isolationssystem-Schichten durch eine oder mehrere solcher Bandmaterialstreifen erzeugt sein kann. Beispielsweise sind mehrere Bandmaterialstreifen in radialer Richtung als Wickellagen aufeinander gewickelt, um beispielsweise eine ausreichend dicke Hauptisolationsschicht zu erhalten.

Selbst eine erfindungsgemäße Gestaltung von nur einer der Isolierungssystem-Schichten kann bereits zu einer signifikant längeren Lebensdauer des Isolierungssystems im Allgemeinen beitragen.

Der Begriff "elektrisches Leitelement" beschreibt im Zusammenhang mit elektrischen Maschinen Drähte, Spulen, Stäbe oder dergleichen, welche dauerhaft gegeneinander und/oder gegenüber einem Ständerblechpaket und/oder der sonstigen Umgebung der elektrischen Maschine elektrisch isolieren sind.

Es versteht sich weiter, dass die Bandmaterialstreifen mit ihren gegenüber dem Mittenbereich abgeflachten Langseitenbereichen bzw. mit ihren platten Seitenenden vielfältig hergestellt werden können.

Die vorliegenden Bandmaterialstreifen können beispielsweise, wie bisher üblich, aus auf großen Rollen aufgerollten Bändern gefertigt werden. Diese Bänder werden anwendungsspezifisch zu dem jeweiligen Bandmaterialstreifen mit der gewünschten Breite zugeschnitten. Hierbei haben die Bänder produktionsbedingt ein rechteckiges Profil, wodurch auch die hieraus geschnittenen Bandmaterialstreifen ebenfalls ein entsprechend rechteckiges Profil aufweisen. Vorliegend wird dieses rechteckige Profil jedoch im Sinne der Erfindung umgeformt, wenn die hier verwendeten Bandmaterialstreifen aus derartigen Bändern erzeugt werden.

An dieser Stelle sei klargestellt, dass sich die Herstellung der vorliegenden Bandmaterialstreifen nicht auf diese Herstellungsmethode beschränken muss.

Vorteilhafterweise besitzt der jeweilige Bandmaterialstreifen an seinen Langseitenbereichen also platte Seitenenden.

Besonders einfach gelingt dies, wenn das Material des Bandmaterialstreifens an den Langseitenbereichen bzw. an den Außenseiten des Bandmaterialstreifens komprimiert ist.

Insofern wird die Aufgabe der Erfindung auch von einem Verfahren zum Isolieren eines elektrischen Leitelements einer elektrischen Maschine gelöst, bei welchem eine Innenpotentialsteuerungsschicht, eine Hauptisolierungsschicht, eine Außenglimmschutzschicht und eine Endenglimmschutzschicht jeweils als Bandmaterialstreifen mit einer Vielzahl an Wicklungen um das elektrische Leitelement gewickelt und bei welchem diese Wicklungen an Langseitenbereichen des jeweiligen Bandmaterialstreifens halbüberlappend angeordnet werden, wobei die Langseitenbereiche wenigstens eines der um das elektrische Leitelement gewickelten Bandmaterialstreifen vor dem Wickeln und/oder während des Wickelns um das elektrische Leitelement komprimiert werden.

Ein derartiges Komprimieren bzw. Verpressen der Langseitenbereiche kann beispielsweise im Fertigungsprozess der Bandmaterialstreifen oder beim Zuschneiden der Bandmaterialstreifen aus einem breiten Endlosband vorgenommen werden.

Jedenfalls kann durch ein derartiges Komprimieren bzw. Verpressen der Bandmaterialstreifen das vorliegende Isolierungssystem besonders einfach hergestellt werden.

Ist wenigstens einer der Bandmaterialstreifen in Breitenrichtung an seinen Langseitenbereichen dünner als im Bereich seiner Längsmittelachse ausgestaltet, kann speziell in den Überlappungsbereichen das Volumen der Zwischenräume zwischen einzelnen Wicklungen stark reduziert werden.

In diesem Zusammenhang ist es auch vorteilhaft, wenn der Bandmaterialstreifen an seinen Außenseiten eine geringere Materialdicke aufweist als in seinem Mittenbereich, um hierdurch an den einzelnen Isoliersystem-Schichten günstige Überlappungsbereiche erhalten zu können.

Während bisherige Bandmaterialstreifen insbesondere in Breitenrichtung eine durchgängig konstante Bandmaterialstärke bzw. Bandmaterialdicke aufweisen, ist es vorliegend vorteilhaft, wenn wenigstens einer der Bandmaterialstreifen in Breitenrichtung einen veränderlichen Bandquerschnitt aufweist. Hierdurch ist der Bandmaterialstreifenquerschnitt in Breitenrichtung nicht homogen ausgebildet, so dass die vorstehend erläuterten Effekte gut verwirklicht werden können. Die herkömmlichen Bandmaterialstreifen haben produktionsbedingt nämlich ein rechteckiges Profil.

Die Wechselwirkung zwischen einzelnen Wicklungen kann weiter verbessert werden, wenn die obere Oberflächenseite des Bandmaterialstreifens und die untere Oberflächenseite des Bandmaterialstreifens an den Langseitenbereichen spitz in die Seitenränder aufeinander zu laufen.

Eine weitere vorteilhafte Ausführungsvariante sieht vor, dass wenigstens einer der Bandmaterialstreifen in Breitenrichtung hinsichtlich seiner beiden Oberflächenseiten bikonvex ausgestaltet ist. Durch bikonvex ausgestaltete Oberflächenseiten kann der Bandmaterialstreifen insbesondere an seinen Langseitenbereichen gebogen bzw. abgerundeter als bisher möglich ausgestaltet werden, so dass sich die einzelnen Wicklungen in den Überlappungsbereichen enger aneinander schmiegen können, wodurch wiederum Zwischenräume zwischen den einzelnen Wickellagen wesentlich kleiner ausgeprägt sind.

Vorteilhafterweise können hierdurch abgerundete Bandkanten bzw. Seitenränder erzeugt werden, wodurch scharfe Kanten an den Bandseiten bzw. Seitenrändern der Langseitenbereiche vermieden werden können.

Des Weiteren ist es vorteilhaft, wenn ein Mittenbereich des wenigstens einer der Bandmaterialstreifen mittels eines stetig gekrümmten Übergangsbereichs in dünner als der Mittenbereich ausgestaltete Langseitenbereiche dieses einen Bandmaterialstreifens übergeht. Durch den stetig gekrümmten Übergangsbereich können sich die miteinander wechselwirkenden Langseitenbereiche des Bandmaterialstreifens an den an- bzw. aufeinander liegenden Wicklungen besonders lückenfrei aneinander anschmiegen.

Zweckmäßigerweise ist ein äußerer Seitenrand eines Langseitenbereichs einer Wicklung des wenigstens einen Bandmaterialstreifens bis über einen Wendepunkt einer in Breitenrichtung konkav gekrümmten Oberfläche einer unmittelbar benachbarten Wicklung des wenigstens einen Bandmaterialstreifens angeordnet, so dass die Wicklungen des wenigstens einen Bandmaterialstreifens besonders innig miteinander verbunden sein können.

Die einzelnen Wicklungen des Bandmaterialstreifens können darüber hinaus wesentlich besser miteinander wechselwirken, wenn ein äußerer Seitenrand eines Langseitenendes einer Wicklung des Bandmaterialstreifens bis über die Längsmittellinie einer unmittelbar benachbarten Wicklung des Bandmaterialstreifens angeordnet ist. Auch hierdurch kann die Gefahr von Teilentladungen reduziert werden.

Ferner ist es vorteilhaft, wenn eine Kontaktfläche zwischen zwei unmittelbar benachbarten Wicklungen des wenigstens einen Bandmaterialstreifens in Breitenrichtung bis über einen Wendepunkt einer in Breitenrichtung konkav gekrümmten Oberfläche einer unmittelbar benachbarten Wicklung des wenigstens einen Bandmaterialstreifens angeordnet ist.

Zumindest verringert sich die Kontaktfläche nicht gegenüber bisherigen Lösungen und bleibt mindestens gleich groß. Durch eine derartige Kontaktfläche kann die Gefahr insbesondere von Teilentladungen weiter verringert werden.

An dieser Stelle sei nochmals erwähnt, dass sich durch die günstiger geformten Zwischenräume mit ihren kleineren Harzvolumen und die hierdurch insgesamt homogenere Gestaltung des erfindungsgemäßen Isolierungssystems speziell an den Überlappungsbereichen die eingangs beschriebenen günstigen Effekte im Hinblick auf ein elektrisches Feld vorteilhaft ergeben. Durch die kleineren Zwischenräume entstehen nur wesentlich kleinere Fehlstellen, in welchen sich Harzbereiche mit weniger Glimmerpartikelanteil ansammeln können, wodurch insgesamt der elektrisch feste, anorganische Anteil im Isolierungssystem höher ist. Dies erhöht wiederum insbesondere die elektrische Festigkeit. Die vorliegenden Merkmale bedingen eine tendenziell höhere Wärmeleitfähigkeit des Isolierungssystems. Zudem sinkt der Harzverbrauch bei der Herstellung des Isolierungssystems.

Des Weiteren können, bezogen auf den Grenzbereich zwischen der Außenglimmschutzschicht und der Hauptisolationsschicht sowie bezogen auf den Grenzbereich zwischen der Innenpotentialsteuerungsschicht und der Hauptisolationsschicht, durch die abgerundeten Bandmaterialstreifenkanten auch lokale Felderhöhungen an den Seitenrändern idealerweise zur Gänze vermieden werden.

Weitere wesentliche Effekte und Vorteile, die mit vorliegender Erfindung einzeln oder kombiniert erzielt werden können, sind neben der schon beschriebenen Vermeidung von Felderhöhungen beispielsweise noch eine reduzierte Erosionsgeschwindigkeit der Hauptisolierungsschicht, eine reduzierte oder idealerweise eliminierte Erosion der leitfähigeren Isolierungssystem-Schichten, insbesondere der Außenglimmschutzschicht, ein dünner bauendes Isolierungssystem allgemein bei gleichen Lebensdaueranforderungen bzw. -erwartungen und/oder eine Leistungssteigerung der elektrischen Maschine bzw. insbesondere des Turbogenerators.

Im Allgemeinen können durch die vorliegenden Merkmale der Erfindung, insbesondere durch die abgerundete bzw. bikonvexe Form der Bandmaterialstreifen, eine homogenere Gestaltung des Isolierungssystems mit der Folge reduzierter Feldverzerrungen in der Hauptisolierungsschicht und unter Umgehung leitfähiger Kanten oder dergleichen an den leitfähigeren Isolierungssystem-Schichten, wie etwa der Innenpotentialsteuerungsschicht, der Außenglimmschutzschicht und der Endenglimmschutzschicht, realisiert werden.

Im Folgenden wird ein Ausschnitt einer bevorzugten Ausführungsform des erfindungsgemäßen Isolierungssystems eines in einem Ständerblechpaket isoliert gehalterten elektrischen Leitelements eines Turbogenerators anhand der beigefügten schematischen Zeichnungen erläutert.

Es zeigt:
- Fig. 1: schematisch eine Aufsicht eines Isoliersystems eines in einer Nut eines Ständerblechpakets eines Turbogenerators isoliert gehalterten elektrischen Leitelements, und
- Fig. 2: schematisch eine Detailansicht einer Hauptisolierungsschicht und einer daran angrenzenden radial weiter innenliegenden Innenpotentialsteuerungsschicht des Isoliersystems aus der Fig. 1.

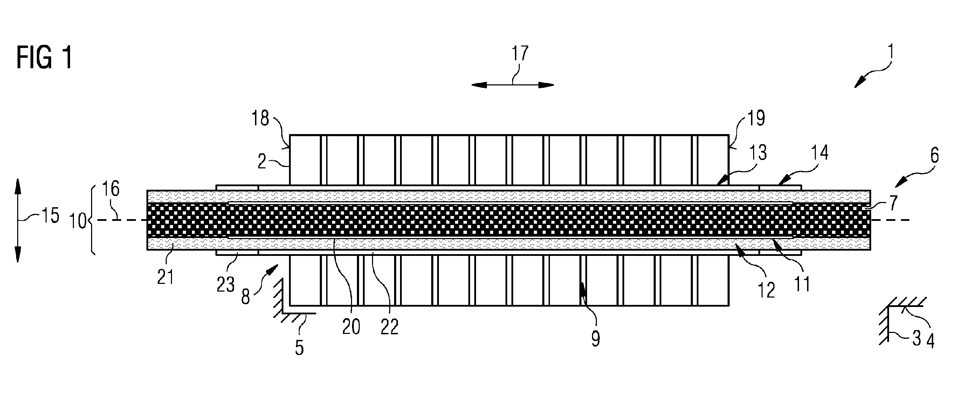

Das erfindungsgemäße Isolierungssystem 1 ist an einem in der Figur 1 beispielhaft gezeigten Ständerblechpaket 2 eines an einer elektrischen Maschine 3 in Gestalt eines Turbogenerators 4 eingesetzten Stators 5 vorgesehen, um ein elektrisches Leitelement 6 in Form eines Kupferstabelements 7 gegenüber dem Ständerblechpaket 2 zu isolieren. Das elektrische Leitelement 6 ist hierbei in Nuten 8 (nur exemplarisch gezeigt) des Ständerblechpakets 2 gehaltert. Das Ständerblechpaket 2 ist noch von einer Vielzahl an Kühlkanälen 9 durchzogen, um Wärme besser ableiten zu können.

Das Isolierungssystem 1 besteht aus einer Vielzahl an Isolierungssystem-Schichten 10, nämlich aus einer Innenpotentialsteuerungsschicht 11, aus einer Hauptisolationsschicht 12, aus einer Außenglimmschutzschicht 13 und aus einer Endenglimmschutzschicht 14, welche um das elektrische Leitelement 6 gewickelt sind.

In diesem Ausführungsbeispiel sind die Isolierungssystem-Schichten 10 in radialer Richtung 15 folgendermaßen angeordnet.

Ausgehend von einer Mittelachse 16 des zu isolierenden elektrischen Leitelements 6 ist die Innenpotentialsteuerungsschicht 11 radial weiter innen direkt in axialer Richtung 17 bereichsweise auf das elektrische Leitelement 6 aufgewickelt, so dass die Innenpotentialsteuerungsschicht 11 bis über die Kopfseiten 18 bzw. 19 des Ständerblechpakets 2 übersteht. Die Innenpotentialsteuerungsschicht 11 ist in diesem Ausführungsbeispiel als innerer mit Harz (nicht beziffert) durchtränkter Bandmaterialstreifen 20 ausgeführt, der um das elektrische Leitelement 6 herumgewickelt ist.

Radial weiter außen ist die Hauptisolationsschicht 12 angeordnet, welche wiederum auf die radial weiter innen liegende Innenpotentialsteuerungsschicht 11 aufgewickelt ist. Die Hauptisolationsschicht 12 ist in diesem Ausführungsbeispiel dementsprechend als mittlere mit Harz (nicht beziffert) durchtränkte Bandmaterialstreifen 21 (nur exemplarisch beziffert) ausgeführt, die um die Innenpotentialsteuerungsschicht 11 herumgewickelt sind.

Radial noch weiter außen sind dann die Außenglimmschutzschicht 13 und die Endenglimmschutzschicht 14 angeordnet, welche in axialer Richtung 17 axial nebeneinander auf die radial weiter innen liegende Hauptisolationsschicht 12 aufgewickelt sind. Sowohl die Außenglimmschutzschicht 13 als auch die Endenglimmschutzschicht 14 sind jeweils als äußere mit Harz (nicht beziffert) durchtränkte Bandmaterialstreifen 22 bzw. 23 erzeugt.

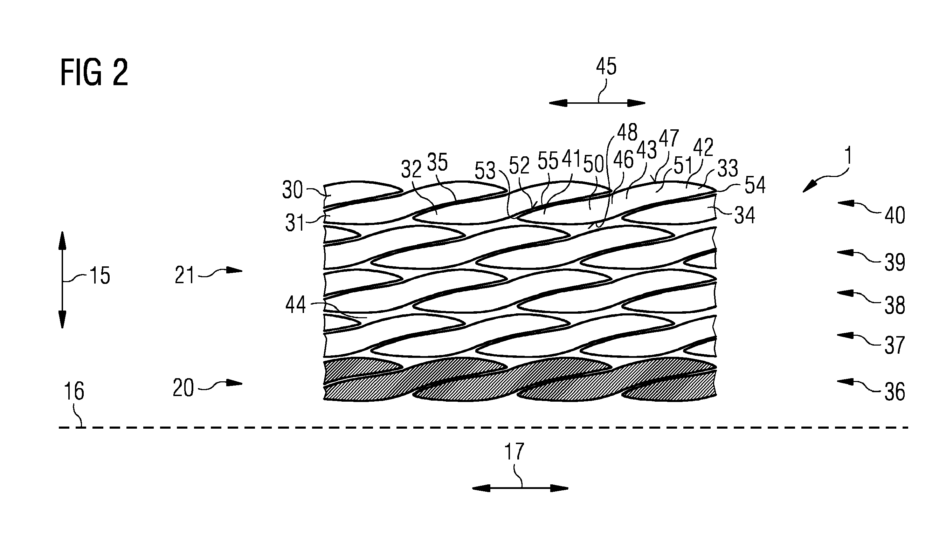

Wie gut aus der Darstellung gemäß der Figur 2 erkennbar ist, sind zum Erzeugen der einzelnen Isolierungssystem-Schichten 10 die jeweiligen Bandmaterialstreifen 20, 21, 22 bzw. 23 jeweils mit einer Vielzahl an Wicklungen 30, 31, 32, 33, 34 (nur beispielhaft beziffert, siehe Figur 2) um das elektrische Leitelement 6 gewickelt; und zwar in der Art, dass die einzelnen Wicklungen 30, 31, 32, 33, 34 des jeweiligen Bandmaterialstreifens 20, 21, 22 bzw. 23 in axialer Richtung 17 entlang der Mittelachse 16 mit Überlappungsbereichen 35 (hier nur exemplarisch beziffert) halbüberlappend zueinander angeordnet sind.

In diesem Ausführungsbeispiel besteht die Innenpotentialsteuerungsschicht 11 aus einer einzelnen durch den einzigen Bandmaterialstreifen 20 erzeugten Wickellage 36, während die Hauptisolationsschicht 12 aus insgesamt vier Wickellagen 37, 38, 39 und 40 gewickelt ist.

Wie beispielhaft an der Wicklung 33 stellvertretend für alle übrigen Wicklungen 30, 31, 32, bzw. 34 der Isolierungssystem-Schichten 10 erläutert, sind in diesem Ausführungsbeispiel die Bandmaterialstreifen 20 bis 23 an ihren jeweiligen Langseitenbereichen 41 und 42 gegenüber ihren jeweiligen Mittenbereichen 43 abgeflacht. Hierdurch können sich die Wicklungen 30, 31, 32, 33, bzw. 34 enger aneinander schmiegen und es entstehen hierdurch wesentlich kleinere mit Harz gefüllte Zwischenräume 44 (nur exemplarisch beziffert) als dies bisher bei aus dem Stand der Technik bekannten Methoden der Fall ist.

Jedenfalls sind vorliegend die bisher bekannten Problemen hinsichtlich überwiegend nur mit Harz verfüllten Fehlstellen und eine hierdurch bedingte geringere elektrische Festigkeit usw. gut gelöst.

Dieses Abflachen der Langseitenbereiche 41 und 42 kann besonders gut dadurch erzielt werden, dass die auf Breitenendmaß geschnittenen oder direkt auf Breitenendmaß gefertigten Bandmaterialstreifen 20 bis 23 an ihren Außenseiten bzw. an den Langseitenbereiche 41 und 42 komprimiert werden.

Unzweifelhaft ist es günstig, dass die Bandmaterialstreifen 20 bis 23 in ihrer Breitenrichtung 45 an ihren Langseitenbereichen 41 bzw. 42 dünner als im Bereich ihrer Längsmittelachsen 46 (hier nur exemplarisch beziffert) ausgestaltet sind und damit einen veränderlichen Bandquerschnitt besitzen.

Darüber hinaus liegen die einzelnen Wicklungen 30, 31, 32, 33 bzw. 34 hierbei noch enger beieinander, da die Oberflächenseiten 47 und 48 der jeweiligen Bandmaterialstreifen 20 bis 23 jeweils bikonvex stetig gekrümmt sind und nicht geknickt, wie bisher üblich.

Des Weiteren liegen zwischen den Mittenbereichen 43 der Bandmaterialsteifen 20 bis 23 und den abgeflachten dünneren Langseitenbereichen 41 bzw. 42 stetig gekrümmte Übergangsbereiche 50 bzw. 51 (hier nur exemplarisch eingezeichnet), wodurch die einzelnen Wicklungen 30 bis 34 noch enger aneinander liegen.

Ferner sind die zwischen den einzelnen Wicklungen 30 bis 34 wirkenden Kontaktflächen 52 (hier nur exemplarisch beziffert) besonders großflächig ausgeprägt, da die äußeren Seitenränder 53 bzw. 54 (nur exemplarisch beziffert) der Langseitenbereichen 41 bzw. 42 der Wicklungen 30 bis 34 bis über einen jeweiligen Wendepunkt 55 (nur exemplarisch beziffert) der in Breitenrichtung 45 konkav gekrümmten Oberflächenseiten 47 bzw. 48 der jeweils unmittelbar benachbarten Wicklung 30 bis 34 hinaus angeordnet ist.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Isolierungssystem (1) eines elektrischen Leitelements (6) einer elektrischen Maschine (3) mit mehreren Isolierungssystem-Schichten (10) umfassend eine Innenpotentialsteuerungsschicht (11), eine Hauptisolationsschicht (12), eine Außenglimmschutzschicht (13) und eine Endenglimmschutzschicht (14),
bei welchem diese Isolierungssystem-Schichten (10) jeweils einen mit Harz durchtränkten Bandmaterialstreifen (20, 21, 22, 23) umfassen, welcher mit einer Vielzahl an Wicklungen (30, 31, 32, 34) um das elektrische Leitelement (6, 7) derart gewickelt ist, dass die Wicklungen (30, 31, 32, 34) mit Überlappungsbereichen (35) an Langseitenbereichen (41, 42) des jeweiligen Bandmaterialstreifens (20, 21, 22, 23) halbüberlappend angeordnet sind,
wobei wenigstens einer der Bandmaterialstreifen (20, 21, 22, 23) an seinen Langseitenbereichen (41, 42) gegenüber seinem Mittenbereich (43) abgeflacht ist.

2. Isolierungssystem (1) nach Anspruch 1,
wobei wenigstens einer der Bandmaterialstreifen (20, 21, 22, 23) in Breitenrichtung (45) an seinen Langseitenbereichen (41, 42) dünner als im Bereich seiner Längsmittellinie (46) ausgestaltet ist.

3. Isolierungssystem (1) nach Anspruch 1 oder 2,
wobei wenigstens einer der Bandmaterialstreifen (20, 21, 22, 23) in Breitenrichtung (45) einen veränderlichen Bandquerschnitt aufweist.

4. Isolierungssystem (1) nach einem der Ansprüche 1 bis 3, wobei die obere Oberflächenseite (47) des Bandmaterialstreifens (20, 21, 22, 23) und die untere Oberflächenseite (48) des Bandmaterialstreifens (20, 21, 22, 23) an den Langseitenbereichen (41, 42) spitz in die Seitenränder (53, 54) aufeinander zulaufen.

5. Isolierungssystem (1) nach einem der Ansprüche 1 bis 4, wobei wenigstens einer der Bandmaterialstreifen (20, 21, 22, 23) in Breitenrichtung (45) hinsichtlich seiner beiden Oberflächenseiten (47, 48) bikonvex ausgestaltet ist.

6. Isolierungssystem (1) nach einem der Ansprüche 1 bis 5, wobei ein Mittenbereich (43) wenigstens einer der Bandmaterialstreifen (20, 21, 22, 23) mittels stetig gekrümmter Übergangsbereiche (50, 51) in dünner als der Mittenbereich (43) ausgestaltete Langseitenbereiche (41, 42) dieses einen Bandmaterialstreifens (20, 21, 22, 23) übergeht.

7. Isolierungssystem (1) nach einem der Ansprüche 1 bis 6, wobei ein äußerer Seitenrand (53, 54) eines Langseitenbereichs (41, 42) einer Wicklung (30, 31, 32, 33, 34) wenigstens einer der Bandmaterialstreifen (20, 21, 22, 23) bis über einen Wendepunkt (55) einer in Breitenrichtung (45) konkav gekrümmten Oberfläche (47, 48) einer unmittelbar benachbarten Wicklung (30, 31, 32, 33, 34) dieses einen Bandmaterialstreifens (20, 21, 22, 23) angeordnet ist.

8. Isolierungssystem (1) nach einem der Ansprüche 1 bis 7, wobei ein äußerer Seitenrand (53, 54) eines Langseitenbereichs (41, 42) einer Wicklung (30, 31, 32, 33, 34) wenigstens einer der Bandmaterialstreifen (20, 21, 22, 23) bis über die Längsmittellinie (46) einer unmittelbar benachbarten Wicklung (30, 31, 32, 33, 34) dieses einen Bandmaterialstreifens (20, 21, 22, 23) angeordnet ist.

9. Isolierungssystem (1) nach einem der Ansprüche 1 bis 8, wobei eine Kontaktfläche (52) zwischen zwei unmittelbar benachbarten Wicklungen (30, 31, 32, 33, 34) wenigstens einer der Bandmaterialstreifen (20, 21, 22, 23) in Breitenrichtung (45) bis über einen Wendepunkt (55) einer in Breitenrichtung (45) konkav gekrümmten Oberflächenseite (47, 48) einer unmittelbar benachbarten Wicklung (30, 31, 32, 33, 34) dieses einen Bandmaterialstreifens (20, 21, 22, 23) angeordnet ist.

10. Stator (5) einer elektrischen Maschine (3) mit wenigstens einem Nuten (8) umfassenden Ständerblechpaket (2) und mit elektrisch leitenden Leitelementen (6, 7), welche in den Nuten (8) des wenigstens einen Ständerblechpakets (2) isolierend gehaltert sind,
wobei der Stator (5) ein Isolierungssystem (1) nach einem der vorhergehenden Ansprüche umfasst.

11. Elektrische Maschine (3),
insbesondere Turbogenerator (4),
mit einem Isolierungssystem (1) zum Isolieren von elektrischen Leitelementen (6, 7) gegenüber einem Ständerblechpaket (2) zum Haltern der elektrischen Leitelemente (6, 7), wobei sich die elektrische Maschine (3) durch ein Isolierungssystem (1) nach einem der Ansprüche 1 bis 9 und/oder durch einen Stator (5) nach Anspruch 10 auszeichnet.

12. Verfahren zum Isolieren eines elektrischen Leitelements (6, 7) einer elektrischen Maschine (3),
bei welchem eine Innenpotentialsteuerungsschicht (11), eine Hauptisolierungsschicht (12), eine Außenglimmschutzschicht (13) und eine Endenglimmschutzschicht (14) jeweils als Bandmaterialstreifen (20, 21, 22, 23) mit einer Vielzahl an Wicklungen (30, 31, 32, 34) um das elektrische Leitelement (6, 7) gewickelt und bei welchem diese Wicklungen (30, 31, 32, 34) an Langseitenbereichen (41, 42) des jeweiligen Bandmaterialstreifens (20, 21, 22, 23) halbüberlappend angeordnet werden,
wobei die Langseitenbereiche (41, 42) wenigstens eines der um das elektrische Leitelement (6, 7) gewickelten Bandmaterialstreifen (20, 21, 22, 23) vor dem Wickeln und/oder während des Wickelns um das elektrische Leitelement (6, 7) komprimiert werden.
